# EUROPEAN PATENT APPLICATION

(11) **EP 2 472 379 A1**
(43) Date of publication of application: **04.07.2012**
(21) Application number: 11191654.0
(22) Date of filing: 02.12.2011
(51) Int. Cl.: G06F 3/048, G06F 1/16

(54) **Methods and apparatuses for facilitating content navigation**

(30) Priority: 29.12.2010 US 980945
(71) Applicant: Nokia Corporation, 02150 Espoo (FI)
(72) Inventor: Britton, Jason, Vista, CA 92081 (US)
(74) Representative: Nokia Corporation

(57) **Abstract**

Methods and apparatuses are provided for facilitating content navigation. A method may include receiving an indication of flexing of a flexible display. The method may further include receiving an indication of a touch gesture input to a control area. The touch gesture may be input to the control area concurrent with flexing of the flexible display. The method may additionally include, responsive to flexing of the flexible display and the concurrent touch gesture, causing navigation through content. Corresponding apparatuses are also provided.

## Description

### TECHNOLOGICAL FIELD

Example embodiments of the present invention relate generally to user interface technology and, more particularly, relate to methods and apparatuses for facilitating content navigation.

### BACKGROUND

The modern communications era has brought about a tremendous expansion of wireline and wireless networks. Wireless and mobile networking technologies have addressed related consumer demands, while providing more flexibility and immediacy of information transfer. Concurrent with the expansion of networking technologies, an expansion in computing power has resulted in development of affordable computing devices capable of taking advantage of services made possible by modern networking technologies. This expansion in computing power has led to a reduction in the size of computing devices and given rise to a new generation of mobile devices that are capable of performing functionality that only a few years ago required processing power that could be provided only by the most advanced desktop computers. Consequently, mobile computing devices having a small form factor have become ubiquitous and are used to access network applications and services by consumers of all socioeconomic backgrounds.

As a result of the expansion of networks and mobile computing devices using networks, there is a vast amount of content available for access by computing device users. This content may be stored locally on a user's computing device and/or may be accessible via a network from a server or other content source. In order to interact with or otherwise access this content, it may be necessary to navigate through the content.

### BRIEF SUMMARY

Methods, apparatuses, and computer program products are herein provided for facilitating content navigation. Methods, apparatuses, and computer program products in accordance with various embodiments may provide several advantages to computing devices and computing device users. Some example embodiments provide an intuitive method for content navigation wherein a user may initiate content navigation by a combination of flexing a flexible display and providing a predefined touch gesture input to a defined control area. In some such embodiments, the user may control a rate of navigation through one or more of a degree of flexing applied to the flexible display or through a property of the touch gesture. Accordingly, a user may intuitively control navigation rate by adjusting one or a combination of inputs to an apparatus comprising a flexible display that is configured in accordance with some example embodiments.

Some example embodiments further provide a graphical user interface for use with content navigation techniques in accordance with various example embodiments. In this regard, some example embodiments provide a graphical user interface comprising a plurality of user interface panels. Accordingly, some example embodiments may facilitate navigation through the user interface panels such that a user may intuitively flip, scroll, or otherwise navigate through the user interface panels in order to navigate to a desired user interface panel using a combination of flexing a flexible display and a touch gesture input as navigation controls.

In a first example embodiment, a method is provided, which comprises receiving an indication of flexing of a flexible display. The method of this example embodiment further comprises receiving an indication of a touch gesture input to a control area. The touch gesture of this example embodiment is input to the control area concurrent with flexing of the flexible display. The method of this example embodiment additionally comprises, responsive to flexing of the flexible display and the concurrent touch gesture, causing navigation through content.

In another example embodiment, an apparatus comprising at least one processor and at least one memory storing computer program code is provided. The at least one memory and stored computer program code are configured, with the at least one processor, to cause the apparatus of this example embodiment to at least receive an indication of flexing of a flexible display. The at least one memory and stored computer program code are configured, with the at least one processor, to further cause the apparatus of this example embodiment to receive an indication of a touch gesture input to a control area. The touch gesture of this example embodiment is input to the control area concurrent with flexing of the flexible display. The at least one memory and stored computer program code are configured, with the at least one processor, to additionally cause the apparatus of this example embodiment, responsive to flexing of the flexible display and the concurrent touch gesture, to cause navigation through content.

In another example embodiment, a computer program product is provided. The computer program product of this example embodiment includes at least one computer-readable storage medium having computer-readable program instructions stored therein. The program instructions of this example embodiment comprise program instructions configured to receive an indication of flexing of a flexible display. The program instructions of this example embodiment further comprise program instructions configured to receive an indication of a touch gesture input to a control area. The touch gesture of this example embodiment is input to the control area concurrent with flexing of the flexible display. The program instructions of this example embodiment additionally comprise program instructions configured, responsive to flexing of the flexible display and the concurrent touch gesture, to cause navigation through content.

In another example embodiment, an apparatus is provided that comprises means for receiving an indication of flexing of a flexible display. The apparatus of this example embodiment further comprises means for receiving an indication of a touch gesture input to a control area. The touch gesture of this example embodiment is input to the control area concurrent with flexing of the flexible display. The apparatus of this example embodiment additionally comprises means for, responsive to flexing of the flexible display and the concurrent touch gesture, causing navigation through content.

The above summary is provided merely for purposes of summarizing some example embodiments of the invention so as to provide a basic understanding of some aspects of the invention. Accordingly, it will be appreciated that the above described example embodiments are merely examples and should not be construed to narrow the scope or spirit of the invention in any way. It will be appreciated that the scope of the invention encompasses many potential embodiments, some of which will be further described below, in addition to those here summarized.

### BRIEF DESCRIPTION OF THE DRAWINGS

Having thus described embodiments of the invention in general terms, reference will now be made to the accompanying drawings, which are not necessarily drawn to scale, and wherein:

FIG. 1 illustrates a block diagram of an apparatus for facilitating content navigation according to an example embodiment;

FIG. 2 is a schematic block diagram of a mobile terminal according to an example embodiment;

FIG. 3 illustrates a system for facilitating content navigation according to an example embodiment;

FIG. 4 illustrates interaction with an example user interface of a flexible display for facilitating content navigation according to an example embodiment;

FIG. 5 illustrates interaction with an example user interface of a flexible display for facilitating content navigation according to an example embodiment;

FIG. 6 illustrates an example user interface for facilitating content navigation according to an example embodiment;

FIG. 7 illustrates an example navigation effect according to an example embodiment;

Fig. 8 illustrates an example process diagram according to an example method for content navigation according to an example embodiment;

Fig. 9 illustrates an example process diagram according to an example method for content navigation according to an example embodiment;

FIG. 10 illustrates a matrix illustrating determination of a rate of navigation according to an example embodiment;

FIG. 11 illustrates a flowchart according to an example method for content navigation according to an example embodiment; and

FIG. 12 illustrates a flowchart according to an example method for content navigation according to an example embodiment.

### DETAILED DESCRIPTION

Some embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout.

As used herein, the terms "data," "content," "information" and similar terms may be used interchangeably to refer to data capable of being transmitted, received, displayed and/or stored in accordance with various example embodiments. Thus, use of any such terms should not be taken to limit the spirit and scope of the disclosure. Further, where a computing device is described herein to receive data from another computing device, it will be appreciated that the data may be received directly from the another computing device or may be received indirectly via one or more intermediary computing devices, such as, for example, one or more servers, relays, routers, network access points, base stations, and/or the like.

The term "computer-readable medium" as used herein refers to any medium configured to participate in providing information to a processor, including instructions for execution. Such a medium may take many forms, including, but not limited to a non-transitory computer-readable storage medium (e.g., non-volatile media, volatile media), and transmission media. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Examples of computer-readable media include a floppy disk, a flexible disk, hard disk, magnetic tape, any other magnetic medium, a compact disc read only memory (CD-ROM), compact disc compact disc-rewritable (CD-RW), digital versatile disc (DVD), Blu-Ray, any other optical medium, punch cards, paper tape, optical mark sheets, any other physical medium with patterns of holes or other optically recognizable indicia, a random access memory (RAM), a programmable read only memory (PROM), an erasable programmable read only memory (EPROM), a FLASH-EPROM, any other memory chip or cartridge, a carrier wave, or any other medium from which a computer can read. The term computer-readable storage medium is used herein to refer to any computer-readable medium except transmission media. However, it will be appreciated that where embodiments are described to use a computer-readable storage medium, other types of computer-readable mediums may be substituted for or used in addition to the computer-readable storage medium in alternative embodiments.

Additionally, as used herein, the term `circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

Various example embodiments disclosed herein may provide several advantages to computing devices and computing device users. For example, some example embodiments may facilitate user input and control of user interface navigation at least substantially with use of flexing inputs to a flexible display and touch gestures, a need for WIMP (windows icons menus pointer) input devices may be eliminated in some example embodiments. Accordingly, a need for some wired and/or wireless peripheral devices may be eliminated in some example embodiments. As such, example computing devices in accordance with some example embodiments may benefit from reduced size and/or a more streamlined user interface than computing devices requiring a WIMP input device. Further, navigation through content in accordance with the user interface of some example embodiments may require less time and/or effort than with traditional WIMP user interfaces. In this regard, some example embodiments may require less time and/or effort for a user to navigate to and select a desired user interface panel than may be required to select an icon in a WIMP interface.

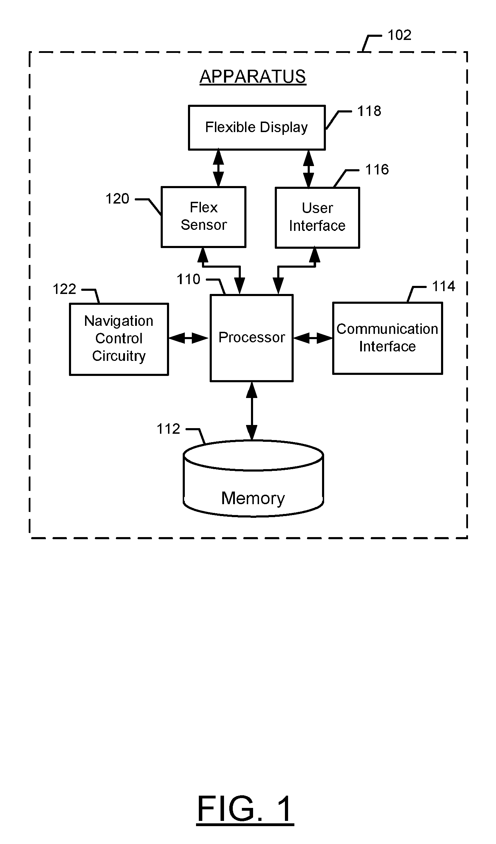

FIG. 1 illustrates a block diagram of an apparatus 102 for facilitating content navigation according to an example embodiment. It will be appreciated that the apparatus 102 is provided as an example of one embodiment and should not be construed to narrow the scope or spirit of the invention in any way. In this regard, the scope of the disclosure encompasses many potential embodiments in addition to those illustrated and described herein. As such, while FIG. 1 illustrates one example of a configuration of an apparatus for facilitating content navigation, other configurations may also be used to implement embodiments of the present invention.

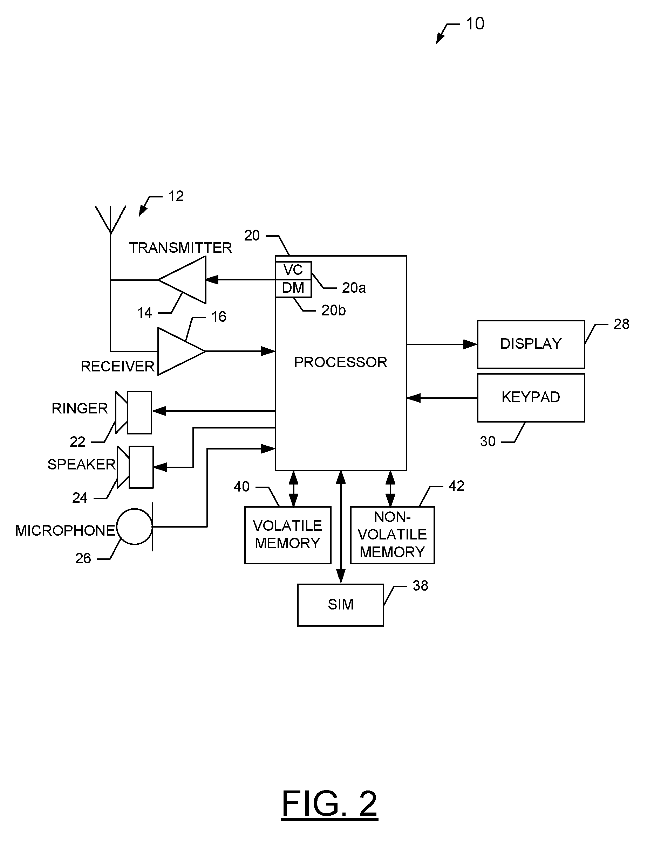

The apparatus 102 may be embodied as a desktop computer, laptop computer, mobile terminal, mobile computer, mobile phone, mobile communication device, game device, digital camera/camcorder, audio/video player, television device, radio receiver, digital video recorder, positioning device, electronic paper (e-paper), a chipset, a computing device comprising a chipset, any combination thereof, and/or the like. In this regard, the apparatus 102 may comprise any computing device that comprises or is in operative communication with a flexible display. In an example embodiment, the apparatus 102 is embodied as a mobile computing device, such as a mobile terminal, such as that illustrated in FIG. 2.

In this regard, FIG. 2 illustrates a block diagram of a mobile terminal 10 representative of one example embodiment of an apparatus 102. It should be understood, however, that the mobile terminal 10 illustrated and hereinafter described is merely illustrative of one type of apparatus 102 that may implement and/or benefit from various example embodiments of the invention and, therefore, should not be taken to limit the scope of the disclosure. While several embodiments of the electronic device are illustrated and will be hereinafter described for purposes of example, other types of electronic devices, such as mobile telephones, mobile computers, personal digital assistants (PDAs), pagers, laptop computers, desktop computers, gaming devices, televisions, e-papers, and other types of electronic systems, may employ various embodiments of the invention.

As shown, the mobile terminal 10 may include an antenna 12 (or multiple antennas 12) in communication with a transmitter 14 and a receiver 16. The mobile terminal 10 may also include a processor 20 configured to provide signals to and receive signals from the transmitter and receiver, respectively. The processor 20 may, for example, be embodied as various means including circuitry, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. Accordingly, although illustrated in FIG. 2 as a single processor, in some embodiments the processor 20 comprises a plurality of processors. These signals sent and received by the processor 20 may include signaling information in accordance with an air interface standard of an applicable cellular system, and/or any number of different wireline or wireless networking techniques, comprising but not limited to Wi-Fi, wireless local access network (WLAN) techniques such as Institute of Electrical and Electronics Engineers (IEEE) 802.11, 802.16, and/or the like. In addition, these signals may include speech data, user generated data, user requested data, and/or the like. In this regard, the mobile terminal may be capable of operating with one or more air interface standards, communication protocols, modulation types, access types, and/or the like. More particularly, the mobile terminal may be capable of operating in accordance with various first generation (1G), second generation (2G), 2.5G, third-generation (3G) communication protocols, fourth-generation (4G) communication protocols, Internet Protocol Multimedia Subsystem (IMS) communication protocols (e.g., session initiation protocol (SIP)), and/or the like. For example, the mobile terminal may be capable of operating in accordance with 2G wireless communication protocols IS-136 (Time Division Multiple Access (TDMA)), Global System for Mobile communications (GSM), IS-95 (Code Division Multiple Access (CDMA)), and/or the like. Also, for example, the mobile terminal may be capable of operating in accordance with 2.5G wireless communication protocols General Packet Radio Service (GPRS), Enhanced Data GSM Environment (EDGE), and/or the like. Further, for example, the mobile terminal may be capable of operating in accordance with 3G wireless communication protocols such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The mobile terminal may be additionally capable of operating in accordance with 3.9G wireless communication protocols such as Long Term Evolution (LTE) or Evolved Universal Terrestrial Radio Access Network (E-UTRAN) and/or the like. Additionally, for example, the mobile terminal may be capable of operating in accordance with fourth-generation (4G) wireless communication protocols s and/or the like as well as similar wireless communication protocols that may be developed in the future.

Some Narrow-band Advanced Mobile Phone System (NAMPS), as well as Total Access Communication System (TACS), mobile terminals may also benefit from embodiments of this invention, as should dual or higher mode phones (e.g., digital/analog or TDMA/CDMA/analog phones). Additionally, the mobile terminal 10 may be capable of operating according to Wi-Fi or Worldwide Interoperability for Microwave Access (WiMAX) protocols.

It is understood that the processor 20 may comprise circuitry for implementing audio/video and logic functions of the mobile terminal 10. For example, the processor 20 may comprise a digital signal processor device, a microprocessor device, an analog-to-digital converter, a digital-to-analog converter, and/or the like. Control and signal processing functions of the mobile terminal may be allocated between these devices according to their respective capabilities. The processor may additionally comprise an internal voice coder (VC) 20a, an internal data modem (DM) 20b, and/or the like. Further, the processor may comprise functionality to operate one or more software programs, which may be stored in memory. For example, the processor 20 may be capable of operating a connectivity program, such as a web browser. The connectivity program may allow the mobile terminal 10 to transmit and receive web content, such as location-based content, according to a protocol, such as Wireless Application Protocol (WAP), hypertext transfer protocol (HTTP), and/or the like. The mobile terminal 10 may be capable of using a Transmission Control Protocol/Internet Protocol (TCP/IP) to transmit and receive web content across the internet or other networks.

The mobile terminal 10 may also comprise a user interface including, for example, an earphone or speaker 24, a ringer 22, a microphone 26, a display 28, a user input interface, and/or the like, which may be operationally coupled to the processor 20. In this regard, the processor 20 may comprise user interface circuitry configured to control at least some functions of one or more elements of the user interface, such as, for example, the speaker 24, the ringer 22, the microphone 26, the display 28, and/or the like. The processor 20 and/or user interface circuitry comprising the processor 20 may be configured to control one or more functions of one or more elements of the user interface through computer program instructions (e.g., software and/or firmware) stored on a memory accessible to the processor 20 (e.g., volatile memory 40, non-volatile memory 42, and/or the like). Although not shown, the mobile terminal may comprise a battery for powering various circuits related to the mobile terminal, for example, a circuit to provide mechanical vibration as a detectable output. The display 28 of the mobile terminal may be of any type appropriate for the electronic device in question with some examples including a plasma display panel (PDP), a liquid crystal display (LCD), a light-emitting diode (LED), an organic light-emitting diode display (OLED), a projector, a holographic display or the like. The display 28 may, for example, comprise a flexible display, such as a flexible OLED. The user input interface may comprise devices allowing the mobile terminal to receive data, such as a keypad 30, a touch display (e.g., some example embodiments wherein the display 28 is configured as a touch display), a joystick (not shown), and/or other input device. In embodiments including a keypad, the keypad may comprise numeric (0-9) and related keys (#, *), and/or other keys for operating the mobile terminal.

The mobile terminal 10 may comprise memory, such as a subscriber identity module (SIM) 38, a removable user identity module (R-UIM), and/or the like, which may store information elements related to a mobile subscriber. In addition to the SIM, the mobile terminal may comprise other removable and/or fixed memory. The mobile terminal 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices (e.g., hard disks, floppy disk drives, magnetic tape, etc.), optical disc drives and/or media, non-volatile random access memory (NVRAM), and/or the like. Like volatile memory 40 non-volatile memory 42 may include a cache area for temporary storage of data. The memories may store one or more software programs, instructions, pieces of information, data, and/or the like which may be used by the mobile terminal for performing functions of the mobile terminal. For example, the memories may comprise an identifier, such as an international mobile equipment identification (IMEI) code, capable of uniquely identifying the mobile terminal 10.

Returning to FIG. 1, in an example embodiment, the apparatus 102 includes various means for performing the various functions herein described. These means may comprise one or more of a processor 110, memory 112, communication interface 114, user interface 116, flexible display 118, flex sensor 120, or navigation control circuitry 122. The means of the apparatus 102 as described herein may be embodied as, for example, circuitry, hardware elements (e.g., a suitably programmed processor, combinational logic circuit, and/or the like), a computer program product comprising computer-readable program instructions (e.g., software or firmware) stored on a computer-readable medium (e.g. memory 112) that is executable by a suitably configured processing device (e.g., the processor 110), or some combination thereon

In some example embodiments, one or more of the means illustrated in FIG. 1 may be embodied as a chip or chip set. In other words, the apparatus 102 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. In this regard, the processor 110, memory 112, communication interface 114, user interface 116, and/or navigation control circuitry 122 may be embodied as a chip or chip set. The apparatus 102 may therefore, in some cases, be configured to or may comprise component(s) configured to implement embodiments of the present invention on a single chip or as a single "system on a chip." As such, in some cases, a chip or chipset may constitute means for performing one or more operations for providing the functionalities described herein and/or for enabling user interface navigation with respect to the functionalities and/or services described herein.

The processor 110 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), one or more other types of hardware processors, or some combination thereof. Accordingly, although illustrated in FIG. 1 as a single processor, in some embodiments the processor 110 comprises a plurality of processors. The plurality of processors may be in operative communication with each other and may be collectively configured to perform one or more functionalities of the apparatus 102 as described herein. The plurality of processors may be embodied on a single computing device or distributed across a plurality of computing devices collectively configured to function as the apparatus 102. In embodiments wherein the apparatus 102 is embodied as a mobile terminal 10, the processor 110 may be embodied as or comprise the processor 20. In some example embodiments, the processor 110 is configured to execute instructions stored in the memory 112 or otherwise accessible to the processor 110. These instructions, when executed by the processor 110, may cause the apparatus 102 to perform one or more of the functionalities of the apparatus 102 as described herein. As such, whether configured by hardware or software methods, or by a combination thereof, the processor 110 may comprise an entity capable of performing operations according to embodiments of the present invention while configured accordingly. Thus, for example, when the processor 110 is embodied as an ASIC, FPGA or the like, the processor 110 may comprise specifically configured hardware for conducting one or more operations described herein. Alternatively, as another example, when the processor 110 is embodied as an executor of instructions, such as may be stored in the memory 112, the instructions may specifically configure the processor 110 to perform one or more algorithms and operations described herein.

The memory 112 may comprise, for example, volatile memory, non-volatile memory, or some combination thereof. In this regard, the memory 112 may comprise a non-transitory computer-readable storage medium. Although illustrated in FIG. 1 as a single memory, the memory 112 may comprise a plurality of memories. The plurality of memories may be embodied on a single computing device or may be distributed across a plurality of computing devices collectively configured to function as the apparatus 102. In various example embodiments, the memory 112 may comprise a hard disk, random access memory, cache memory, flash memory, a compact disc read only memory (CD-ROM), digital versatile disc read only memory (DVD-ROM), an optical disc, circuitry configured to store information, or some combination thereof. In embodiments wherein the apparatus 102 is embodied as a mobile terminal 10, the memory 112 may comprise the volatile memory 40 and/or the non-volatile memory 42. The memory 112 may be configured to store information, data, applications, instructions, or the like for enabling the apparatus 102 to carry out various functions in accordance with various example embodiments. For example, in some example embodiments, the memory 112 is configured to buffer input data for processing by the processor 110. Additionally or alternatively, the memory 112 may be configured to store program instructions for execution by the processor 110. The memory 112 may store information in the form of static and/or dynamic information. The stored information may include, for example, images, content, media content, user data, application data, service data, and/or the like. This stored information may be stored and/or used by the navigation control circuitry 122 during the course of performing its functionalities.

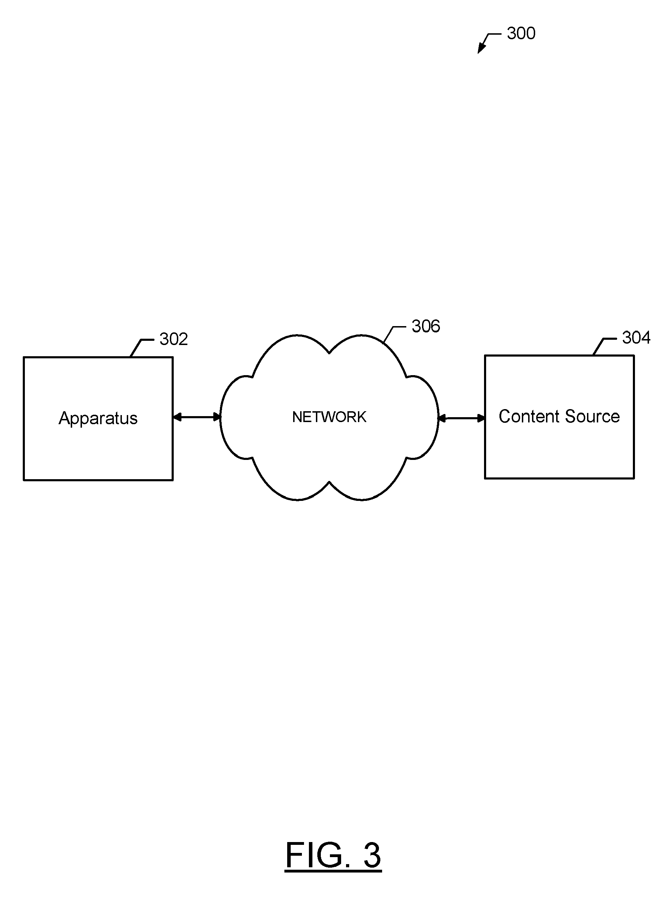

The communication interface 114 may be embodied as any device or means embodied in circuitry, hardware, a computer program product comprising computer readable program instructions stored on a computer readable medium (e.g., the memory 112) and executed by a processing device (e.g., the processor 110), or a combination thereof that is configured to receive and/or transmit data from/to another computing device. In an example embodiment, the communication interface 114 is at least partially embodied as or otherwise controlled by the processor 110. In this regard, the communication interface 114 may be in communication with the processor 110, such as via a bus. The communication interface 114 may include, for example, an antenna, a transmitter, a receiver, a transceiver and/or supporting hardware or software for enabling communications with one or more remote computing devices. The communication interface 114 may be configured to receive and/or transmit data using any protocol that may be used for communications between computing devices. In this regard, the communication interface 114 may be configured to receive and/or transmit data using any protocol that may be used for transmission of data over a wireless network, wireline network, some combination thereof, or the like by which the apparatus 102 and one or more computing devices may be in communication. As an example, the communication interface 114 may be configured to receive and/or otherwise access content (e.g., web page content, streaming media content, and/or the like) over a network (e.g., the network 306 illustrated in FIG. 3) from a server or other content source (e.g., the content source 304). The communication interface 114 may additionally be in communication with the memory 112, user interface 116, and/or navigation control circuitry 122, such as via a bus.

The user interface 116 may be in communication with the processor 110 to receive an indication of a user input and/or to provide an audible, visual, mechanical, or other output to a user. As such, the user interface 116 may include, for example, a keyboard, a mouse, a joystick, a display, a touch screen display, a microphone, a speaker, and/or other input/output mechanisms. In some example embodiments, the user interface 116 comprises or is in communication with one or more displays, such as the flexible display 118. In embodiments wherein the user interface 116 comprises or is in communication with a touch screen display (e.g., in embodiments wherein the flexible display 118 is embodied as a touch screen display), the user interface 116 may additionally be configured to detect and/or receive an indication of a touch gesture or other input to the touch screen display. The user interface 116 may be in communication with the memory 112, communication interface 114, flexible display 118, flex sensor 120, and/or navigation control circuitry 122, such as via a bus.

In some example embodiments, the apparatus 102 comprises a flexible display 118. In alternative example embodiments, such as in embodiments wherein the apparatus 102 is embodied as a chip or chipset, the apparatus 102 may be operatively connected with the flexible display 118 such that the apparatus 102 may control the flexible display 118, receive an indication of and/or otherwise determine a user input (e.g., a flexing input, a touch gesture input, and/or the like) to the flexible display 118, and/or the like. The flexible display 118 may comprise any type of display that may be flexed. By way of non-limiting example, the flexible display 118 may comprise an organic light-emitting diode display (OLED). However, it will be appreciated that the flexible display 118 may be embodied as any type of display, which may be flexed. In some example embodiments, the flexible display 118 may comprise a touch screen display. In such example embodiments, the flexible display 118 may be in communication with the user interface 116 to enable detection of a touch gesture input to the flexible display 118. The flexible display 118 may additionally or alternatively be in communication with one or more of the processor 110, memory 112, communication interface 114, flex sensor 120, or navigation control circuitry 122.

The flex sensor 120 may be embodied as various means, such as circuitry, hardware, a computer program product comprising computer readable program instructions stored on a computer readable medium (e.g., the memory 112) and executed by a processing device (e.g., the processor 110), or some combination thereof and, in some embodiments, is embodied as or otherwise controlled by the processor 110. In embodiments wherein the flex sensor 120 is embodied separately from the processor 110, the flex sensor 120 may be in communication with the processor 110. In some example embodiments, the flex sensor 120 is in communication with or is otherwise in operative contact with the flexible display 118. In this regard, the flex sensor 120 may be configured to detect a flexing of the flexible display 118 (e.g., detect when the flexible display 118 is in a flexed state). The flex sensor 120 may be further configured to detect a degree of flexing of the flexible display 118. For example, the flex sensor 120 may comprise one or more pressure sensors that may be actuated by flexing of the flexible display 120. As another example, the flex sensor 120 may comprise one or more electrical sensors, one or more mechanical sensors, one or more electromechanical sensors, and/or the like that may be activated responsive to flexing of the flexible display 118. The flex sensor 120 may be configured to generate a signal indicative of whether the flexible display 118 is flexed and/or a degree of flexing of the flexible display 118. The flex sensor 120 may be configured to communicate such a signal to the processor 110, user interface 116, and/or navigation control circuitry 122. As such, the navigation control circuitry 122 may be configured in some example embodiments to determine flexing of the flexible display 118 8 and/or a degree of flexing based at least in part on a signal generated by the flex sensor 120. The flex sensor 120 may accordingly be in communication with one or more of the memory 112, communication interface 114, user interface 116, flexible display 118, or navigation control circuitry 122, such as via a bus.

The navigation control circuitry 122 may be embodied as various means, such as circuitry, hardware, a computer program product comprising computer readable program instructions stored on a computer readable medium (e.g., the memory 112) and executed by a processing device (e.g., the processor 110), or some combination thereof and, in some embodiments, is embodied as or otherwise controlled by the processor 110. In embodiments wherein the navigation control circuitry 122 is embodied separately from the processor 110, the navigation control circuitry 122 may be in communication with the processor 110. The navigation control circuitry 122 may further be in communication with one or more of the memory 112, communication interface 114, user interface 116, flexible display 118, or flex sensor 120, such as via a bus.

FIG. 3 illustrates a system 300 for facilitating content navigation according to an example embodiment of the invention. The system 300 may comprise an apparatus 302 and a content source 304 configured to communicate over the network 306. The apparatus 302 may, for example, comprise an embodiment of the apparatus 102 wherein the apparatus 102 is configured to communicate with a remote content source 304 over a network 306 to access content available from the content source 304. The accessed content may, for example, be displayed on a display by the apparatus 102, such as in navigable user interface panels. The content source 304 may comprise any computing device configured to provide content to the apparatus 302 over the network 306. In this regard, the content source 304 may comprise, for example, a network attached storage device, a server, a desktop computer, laptop computer, mobile terminal, mobile computer, mobile phone, mobile communication device, audio/video player, any combination thereof, and/or the like that is configured to provide and/or otherwise share content with the apparatus 302. The network 306 may comprise a wireline network, wireless network (e.g., a cellular network, wireless local area network, wireless wide area network, some combination thereof, or the like), or a combination thereof, and in one embodiment comprises the internet.

Accordingly, it will be appreciated that content described to be displayed and/or navigated through in accordance with various example embodiments may comprise content received, obtained, and/or accessed by the apparatus 102 from a content source 304 over a network 306. Additionally or alternatively, such content may comprise content that is locally stored at the apparatus 102, such as in the memory 112.

In some example embodiments, the apparatus 102 is embodied in a flexible housing embodying the flexible display 118. In this regard, in such embodiments, at least a portion of a housing of the apparatus 102 may be flexed along with the flexible display 118. One example of such embodiments is example embodiments wherein the apparatus 102 is embodied as e-paper. Accordingly, where flexing of the flexible display 118 is described herein, it will be appreciated that flexing of the flexible display 118 may comprise flexing of at least a portion of the apparatus 102, flexing of a flexible housing in which the flexible display 118 is embodied or the like. Alternatively, in other example embodiments, the flexible display 118 may be housed within a rigid housing. In such example embodiments, the flexible display 118 may be flexed within the confines of the housing. For example, a user may depress an exposed surface of the flexible display 118 to flex the flexible display 118 within the housing.

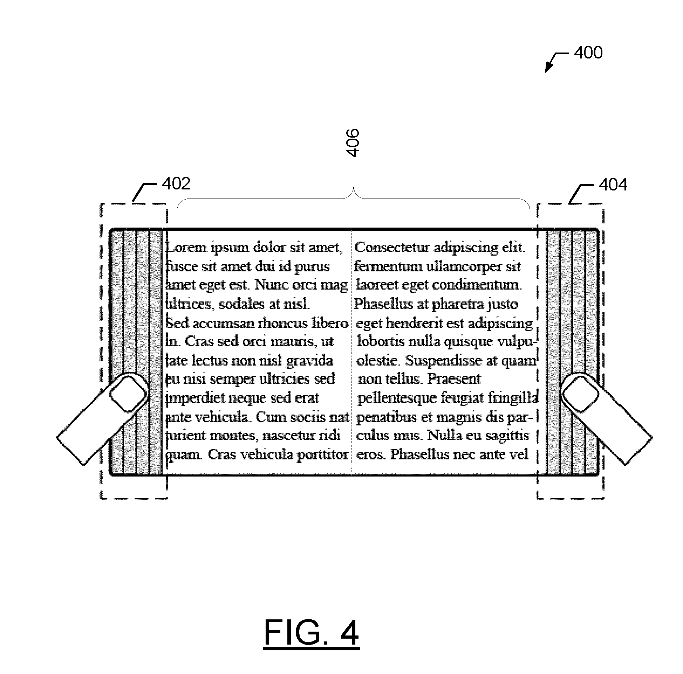

Referring now to FIG. 4, an example user interface 400, such as may be implemented on a flexible display (e.g., a flexible display 118), for facilitating content navigation according to an example embodiment is illustrated. The user interface 400 may comprise one or more control areas. Two such control areas, the control area 402 and the control area 404 are illustrated in FIG. 4. A control area may comprise a designated touch-sensitive area in which a user may provide a touch gesture input for initiating navigation of content, controlling a rate of navigation of content, terminating navigation of content, and/or otherwise controlling navigation of content. In some example embodiments wherein the flexible display 118 comprises a touch screen display, one or more control areas may be implemented on one or more portions of the flexible display 118. However, it will be appreciated, that control areas as described herein are not limited to being implemented on the flexible display 118. In this regard, a control area(s) may, for example, be implemented on one or more second displays of the apparatus 102, which may be used to control navigation of content that may be displayed on the flexible display 118. As another alternative example, a control area may not be implemented on a touch screen display at all, but rather may be implemented on a touch sensitive control pad, on a portion of a housing of the apparatus 102 having sensors configured to detect a touch gesture input, or the like that may be embodied on or may otherwise be in operative communication with the apparatus 102. It will be appreciated that while a control area(s) may be implemented on a forward-facing (e.g., user-facing) surface in some example embodiments such as that illustrated in FIG. 4, a control area(s) may be additionally or alternatively implemented on a back surface, and/or side surface in some example embodiments.

In the example embodiment illustrated in FIG. 4, the control areas 402 and 404 are located on opposing edges of the flexible display. However, it will be appreciated that this illustration is by way of example, and not by way of limitation. As such, in embodiments wherein multiple control areas are implemented, the control areas are not limited to being located opposite of each other, nor are the control areas limited to being implemented on the edges of the flexible display 118. Further, while the control areas 402 and 404 of the user interface 400 are located on the left and right sides of the flexible display, it will be appreciated that in other example embodiments, the control areas may be implemented in other locations, such as on the top and bottom ends of the flexible display.

The user interface 400 may further comprise a content section 406, in which content may be displayed. Such content may, for example, comprise text content, audio content, media content, a web page, an application, a service, and/or the like. The content displayed in the content section 406 may be navigated in accordance with one more example embodiments disclosed herein. In this regard, for example, a user may control navigation of the content by a combination of flexing the flexible display and providing a touch gesture input to one or more of the control area 402 or the control area 404.

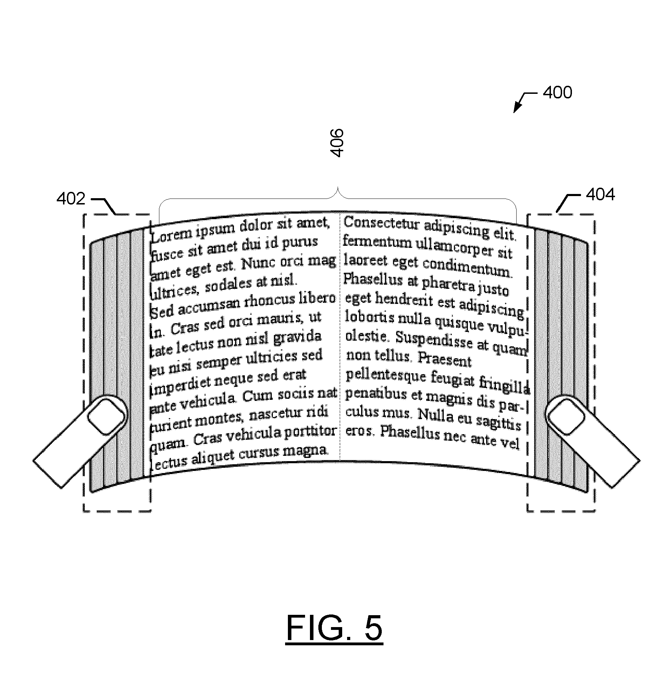

The example flexible display on which the user interface 400 is illustrated in FIG. 4 is in an unflexed state. In order to navigate content, such as may be displayed in the content section 406, a user may flex the flexible display. Referring now to FIG. 5, FIG. 5 illustrates interaction with an example user interface of a flexible display for facilitating content navigation according to an example embodiment. In this regard, FIG. 5 illustrates flexing of the flexible display on which the example user interface 400 is implemented. In this regard, a user may flex a flexible display 118 by applying downward and/or inward pressure on one or more edges of a forward-facing (e.g., user-facing) surface of the flexible display 118, such as is illustrated in FIG. 5. It will be appreciated, however, that the flexing illustrated in FIG. 5 is provided by way of example and not by way of limitation. Accordingly, a flexible display 118 is not limited to being flexed as illustrated in FIG. 5, and a flexible display 128 in accordance with some example embodiments may be flexed in one or more additional or alternative ways. As an example, a flexible display 118 in accordance with some example embodiments may be flexed upward (e.g., toward a user), such as by providing upward and/or inward pressure on one or more edges of an underside of the flexible display 118. As another example, a flexible display 118 in accordance with some example embodiments may be flexed along another axis or orientation of the flexible display 118 than as illustrated in FIG. 5. For example, a flexible display 118 in accordance with some example embodiments may be flexed along a horizontal axis, rather than along a vertical axis, as illustrated in FIG. 5. As an example, a flexible display 118 may, for example, be flexed along a vertical axis (e.g., as illustrated in FIG. 5) in embodiments wherein content navigation is left-to-right and/or right-to-left. However, a flexible display 118 may, for example, be flexed along a horizontal axis in embodiments wherein content navigation is top-to-bottom and/or bottom-to-top.

The navigation control circuitry 122 may be configured to receive an indication of flexing of a flexible display 118 and/or otherwise determine flexing of a flexible display 118. In this regard, for example, the flex sensor 120 may be configured to detect flexing of the flexible display 118 and generate a signal indicative of flexing of the flexible display 118. This signal may be received by the navigation control circuitry 122, which may determine flexing of the flexible display in response to receiving the signal. This signal may carry information indicative of one or more properties of the flexing, such as a degree of flexing, thereby enabling the navigation control circuitry 122 to determine a degree and/or other property of the flexing and control navigation of content based at least in part on thereon. The navigation control circuitry 122 may be configured to cause haptic feedback to be provided to a user of the apparatus 102 in response to flexing of the flexible display 118.

In order to navigate content in accordance with some example embodiments, a user may further provide a predefined touch gesture input to one or more control areas while flexing the flexible display 118. It will be appreciated that in some such embodiments, the order in which the user flexes the flexible display 118 and provides the predefined touch gesture input may not matter, so long as both are performed concurrently for at least a period of time. In this regard, a user may, for example, flex the flexible display 118 and subsequently provide one or more touch gesture inputs to a control area(s) to begin navigation through content. Alternatively, as another example, a user may first provide a touch gesture input(s) to a control area(s) and, while maintaining the touch gesture input(s), flex the flexible display 118 to begin navigation through content.

As such, the navigation control circuitry 122 may be further configured to receive an indication of and/or otherwise determine a predefined touch gesture input to a control area for initiating content navigation. In this regard, the navigation control circuitry 122 may, for example, be configured to detect a touch gesture input to a control area. As another example, the user interface 116, flexible display 118, a sensor(s), and/or the like may be configured to detect a touch gesture input to a control area and generate a signal indicative of flexing of the flexible display 118. This signal may be received by the navigation control circuitry 122, which may determine the touch gesture input in response to receiving the signal. This signal may carry information indicative of a type of the touch gesture input, a property of the touch gesture input, and/or the like, thereby enabling the navigation control circuitry 122 to control navigation of content based at least in part on the information. The navigation control circuitry 122 may be configured to cause haptic feedback to be provided to a user of the apparatus 102 in response to a touch gesture input.

The touch gesture input may comprise any touch gesture input recognized by the navigation control circuitry 122 for initiating navigation of content, controlling a direction of navigation of content, controlling a rate of navigation of content, and/or the like. By way of example, the touch gesture input may comprise a touch and hold gesture, release of a touch and hold gesture, a swipe gesture, some combination thereof, or the like. In an instance in which the navigation control circuitry 122 determines the touch gesture input concurrent with flexing of the flexible display 118 (e.g., while the flexible display 118 is flexed), the navigation control circuitry 122 may cause navigation through content (e.g., content displayed on the flexible display 118). If, however, flexing is applied to the flexible display 118 in the absence of the touch gesture input, or if the touch gesture input is determined in the absence of the flexible display 118 being flexed, the navigation control circuitry 122 may not cause navigation through content. It will be appreciated, however, that in some example embodiments the navigation control circuitry 122 may cause navigation through content in response to flexing of the flexible display 118 even in the absence of a touch gesture input to a control area.

The navigation control circuitry 122 may be configured to determine a rate of navigation and cause navigation at the determined rate. The navigation control circuitry 122 may determine the rate of navigation based at least in part on a degree of flexing of the flexible display 118. As an example, in some example embodiments, the rate of navigation may be proportional to the degree of flexing that is applied to the flexible display 118. Accordingly, for example, in some such example embodiments, the greater the degree of flexing that is applied to the flexible display 118, the greater the rate of navigation may be. Alternatively, for example, in some such example embodiments, the greater the degree of flexing that is applied to the flexible display 118, the less the rate of navigation may be. In such example embodiments, a user may accordingly control the rate of navigation by adjusting the degree of flexing of the flexible display 118. The navigation control circuitry 122 may accordingly be configured to adjust the rate of navigation responsive to a change in the degree of flexing of the flexible display 118. If a user wishes to stop navigation, the user may de-flex the flexible display 118.

The navigation control circuitry 122 may be configured to additionally or alternatively determine and/or adjust a rate of navigation based at least in part on a property of a touch gesture input to a control area. For example, in some example embodiments wherein a touch and hold gesture may be used to initiate and/or control navigation, the navigation control circuitry 122 may determine a rate of navigation based at least in part on one or more of a duration of the touch and hold gesture, a pressure applied to a control area (e.g., to the flexible display 118 in some example embodiments wherein a control area is implemented on a portion of the flexible display 118) by the touch and hold gesture, and/or the like. In this regard, a rate of navigation may be proportional to a duration of the touch and hold gesture and/or to a pressure of the touch and hold gesture. Accordingly, a user may, for example, control a rate of navigation in accordance with some example embodiments by increasing or decreasing a pressure applied to a control area by a touch and hold gesture. As another example, in some example embodiments wherein a swipe gesture may be used to initiate and/or control navigation, the navigation control circuitry 122 may determine and/or adjust a rate of navigation based at least in part on one or more of a length of the swipe gesture, a rate of the swipe gesture, or the like. In this regard, a rate of navigation may, for example, be proportional to a length of the swipe gesture (e.g., the longer the swipe, the greater the navigation rate), the rate of the swipe (e.g., the faster the swipe, the greater the navigation rate), and/or the like.

In some example embodiments wherein the navigation control circuitry 122 is configured to determine a rate of navigation based at least in part on a combination of the degree of flexing of the flexible display 118 and a property of a touch gesture input to a control area, the degree of flexing may define a base rate of navigation and the property of the touch gesture may define a finer level of control of the rate of navigation. In this regard, the degree of flexing may provide a rough or coarse level of control over the navigation rate. In contrast, the property of a touch gesture may provide a more fine level of control, which may enable a user to make a smaller level of adjustment to the navigation rate than may be made by increasing or decreasing a degree of flexing of the flexible display 118. Accordingly, in such example embodiments, the property of the touch gesture may serve as a regulator of a base rate of navigation defined by the degree of flexing.

The navigation control circuitry 122 may further be configured to cause haptic feedback indicative of a rate of navigation and/or of an adjustment to a rate of navigation to be provided to a user. As an example, the navigation control circuitry 122 may be configured to cause feedback having a degree of a force or vibration proportional to a rate of navigation to be provided to the user. As another example, the navigation control circuitry 122 may be configured to cause haptic feedback to be provided in response to a user input (e.g., an adjustment to a degree of flexing, a touch gesture input, and/or the like) that causes a rate of navigation to be adjusted.

Content which may be navigated in accordance with various example embodiments may comprise any type of content. By way of non-limiting example, content may include images, audio content, video content, audio/video content, media content, text content, applications, application data, services, service data, web pages, user data, and/or the like. The content may, for example, be arranged vertically and/or horizontally such that when the content is navigated by the navigation control circuitry 122 in response to flexing of the flexible display 118 and a touch gesture input(s) to a control area(s), the navigation control circuitry 122 may scroll through content displayed on the flexible display 118.

In some example embodiments, however, the content is distributed among a plurality of user interface panels. Each user interface panel may comprise a discrete content or portion of content. In such example embodiments, the plurality of user interface panels may serve as a graphical user interface for an operating system, application, or the like. In such example embodiments, a user interface panel may, for example, comprise or otherwise correspond to a user interface view, a menu level, a menu item, application, and/or the like. For example, in some example embodiments wherein user interface panels serve as a graphical user interface for an operating system, a user interface panel may be associated with an application(s) and/or service(s). Accordingly, when a user navigates to and/or selects a user interface panel, the associated application(s) and/or service(s) may be launched. As another example, in some example embodiments wherein user interface panels serve as a graphical user interface for an operating system, at least some of the user interface panels may correspond to respective files or other resources in a file system. Accordingly, for example, when a user navigates to and/or selects a panel corresponding to a file, the corresponding file may be opened. It will be appreciated that such example embodiments may use a different paradigm than traditional WIMP (windows icons menus pointer) user interfaces. As another example, each of a plurality of user interface panels may comprise a section of related content. In this regard, for example, a user interface panel may comprise a "page" of content for an electronic book, magazine, or the like, such that a user may navigate through the pages using various example embodiments disclosed herein. As further examples, a user interface panel may comprise a web page, an album cover (for example, in a series of one or more album covers in a music application), a photo(s) or thumbnail(s) of a full size photo(s) (e.g., in a series of one or more photos in a photo album), or the like.

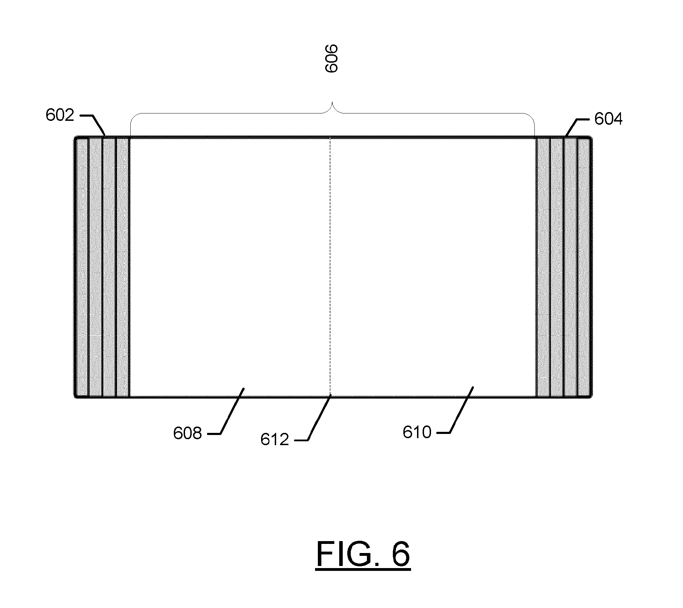

The user interface panels may comprise a series of full screen panels. Alternatively, the user interface panels may be smaller than a content display area of the flexible display 118, such that at least a portion of each of a plurality of user interface panels may be displayed concurrently in a content display area of the flexible display 118. In this regard, FIG. 6 illustrates an example user interface for facilitating content navigation according to an example embodiment wherein user interface panels are smaller than a content display area. The user interface illustrated in Fig. 6 may, for example, be displayed on the flexible display 118. As illustrated in FIG. 6, the example user interface may comprise control areas 602 and 604 and a content display area 606, in which user interface panels may be displayed. In the example of FIG. 6, two user interface panels (user interface panels 608 and 610) are illustrated with each being approximately half of the size of the content display area 606. It will be appreciated, however, that user interface panels are not limited to being the same size as each other and may have a size that is greater than or less than half of the size of a content display area of the flexible display 118. The user interface panels 608 and 610 are illustrated as being separated by the boundary 612. The boundary 612 is provided by way of example, and not by way of limitation. In this regard, a boundary may be illustrated between user interface panels in some example embodiments. However, in other embodiments, a discrete boundary may not be illustrated between displayed user interface panels.

When navigating through user interface panels, the navigation control circuitry 122 may, for example, scroll through user interface panels such that the user interface panels may be visibly scrolled on the flexible display 118. In this regard, the user interface panels may be scrolled vertically, horizontally, some combination thereof, or the like. As another example, the navigation control circuitry 122 may "flip" through displayed user interface panels. In this regard, for example, user interface panels may be flipped horizontally and/or vertically, similarly to pages of a book, calendar, or the like.

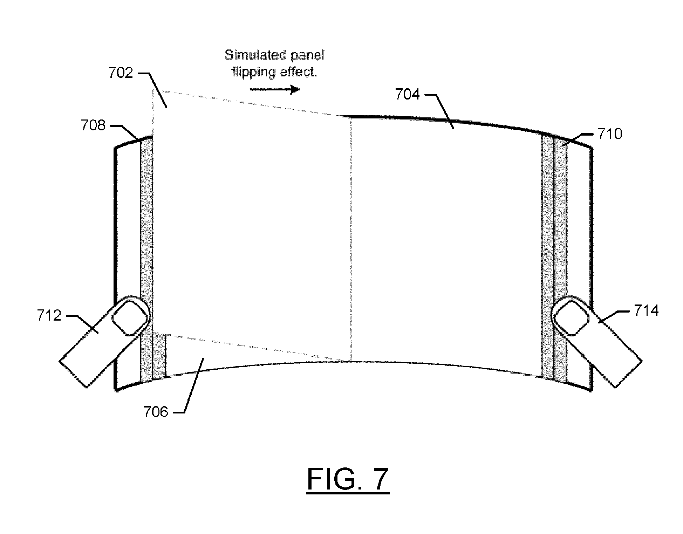

The navigation control circuitry 122 may be configured to cause presentation of a transition effect between user interface panels when navigating user interface panels. The transition effect may, for example, comprise an animated transition effect haptic feedback, and/or the like. An animated transition effect may, for example, comprise a fade in and/or fade out effect, an animated scrolling transition between user interface panels, an animated flipping effect, and/or the like. FIG. 7 illustrates an example navigation effect according to an example embodiment. In this regard, FIG. 7 illustrates a flipping effect according to an example embodiment. As may be seen, in the interface illustrated in FIG. 7, the user interface panels of this example embodiment are arranged similarly to pages of a book. A first set of user interface panels 702 and 704 are displayed. In navigating the user interface panels, user interface panels may be flipped, such as from left-to-right as illustrated in FIG. 7. However, it will be appreciated that example embodiments are not so limited and user interface panels may additionally or alternatively be flipped from right-to-left, top-to-bottom, bottom-to-top, and/or the like. An animated panel flipping effect may be displayed as a transition to a next set of user interface panels. As illustrated in FIG. 7, the user interface panel 702 is illustrated as flipping to the right and a user interface panel 706 is revealed by the flipping effect. It will be appreciated, however, that that flipping effect illustrated in FIG. 7 is provided for illustrative purposes and may be exaggerated compared to a flipping effect that may be displayed in some embodiments. For example, on non three dimensional (3-D) displays, an animated panel flipping effect may not display a panel as a 3-D object protruding from a surface of the flexible display 118. However, in embodiments wherein the flexible display 118 is embodied as a 3-D display, such 3-D transition effects may be implemented. Also, note that in FIG. 7, the display is illustrated in a flexed state and a user is providing touch gesture inputs to the control areas 708 and 710 with the finger 712 and 714, respectively, so as to trigger and control navigation through the user interface panels.

Having now described general content navigation in accordance with various example embodiments, several detailed example embodiments that may use particular touch gesture inputs for initiating and controlling navigation will now be described. In some example embodiments, touch and hold touch gesture inputs may be used to initiate and control navigation. In such example embodiments, a user may, for example, hold the apparatus 102 with the flexible display 118 in a flat, or de-flexed, state. Prior to initiating a navigation action in accordance with such example embodiments, the user may place his thumbs or other digits onto two control areas and hold the digits to the control areas. Accordingly, a touch and hold gesture may be applied to each of the two control areas. The two control areas may, for example, be positioned at opposite edges of the flexible display 118 (e.g., left and right edges along a horizontal axis of the flexible display 118, top and bottom edges along a vertical axis of the flexible display 118, or the like). As an example with reference to FIG. 4, the control areas 402 and 404 of this example embodiment are positioned at opposite edges along a horizontal axis of the flexible display 118.

In accordance with some example embodiments, if no flex is applied to the flexible display 118, the navigation control circuitry 122 may not initiate navigation, regardless of the presence of a touch and hold gesture input to the control areas. Accordingly, the user may flex the flexible display 118 while maintaining the touch and hold gestures. In accordance with some example embodiments, so long as a touch and hold gesture input is maintained at both control areas, the navigation control circuitry 122 may not initiate the navigation action. However, when a touch and hold gesture is terminated at one of the control areas, the navigation control circuitry 122 may initiate the navigation in response to the termination of the touch and hold gesture.

The direction of the navigation may correspond to which of the touch and hold gestures is terminated. For example, in some example embodiments wherein the control areas are positioned at the left and right edges of the flexible display 118, if the touch and hold gesture input to the left control area is terminated, the navigation direction may be from left-to-right. In this regard, user interface panels may be scrolled, flipped, or the like from the left side of the flexible display 118 to the right side of the flexible display 118. However, if the touch and hold gesture input to the right control area is terminated, the navigation direction 118 may be from right-to-left and the user interface panels may be scrolled, flipped, or the like, from the right side of the flexible display 118 to the left side of the flexible display 118.

As another example, the direction of the navigation may be defined by a property of flexing of the flexible display 118. For example, in some example embodiments, the flexible display 118 may be flexed in a manner in addition to or in lieu of an arc with an apex substantially in the middle of the screen, such as illustrated in FIGs. 5 and 7. For example, in some example embodiments, the flexible display 118 may be flexed in an `S' shape. In this case, the direction of navigation may be toward the lower arc of the 'S' shape.

The navigation control circuitry 122 may determine a rate of the navigation based at least in part on a property of the non-terminated touch and hold gesture and/or on a property of the terminated touch and hold gesture. For example, the navigation control circuitry 122 may determine a rate of navigation based at least in part on a degree of pressure applied to the surface of the control area by the non-terminated touch and hold gesture and/or by the terminated touch and hold gesture, a duration of the terminated touch and hold gesture, and/or the like.

A user may terminate the navigation by one or more of de-flexing the flexible display 118 or reapplying the previously terminated touch and hold gesture to the control area. Accordingly, the navigation control circuitry 118 may determine de-flexing of the flexible display 118 and/or reapplication of a touch and hold gesture and cease navigation in response thereto. In some example embodiments, the navigation control circuitry 118 may cease a navigation animation such that a user interface panel or other content that is displayed when the navigation is terminated remains displayed. In other example embodiments, the navigation animation may continue and gradually slow to termination. In this regard, navigation may continue as an "inertia" effect wherein animation and navigation may continue until terminating. The length and rate of such an inertia effect may, for example, vary based at least in part on a rate of navigation prior to termination of the navigation.

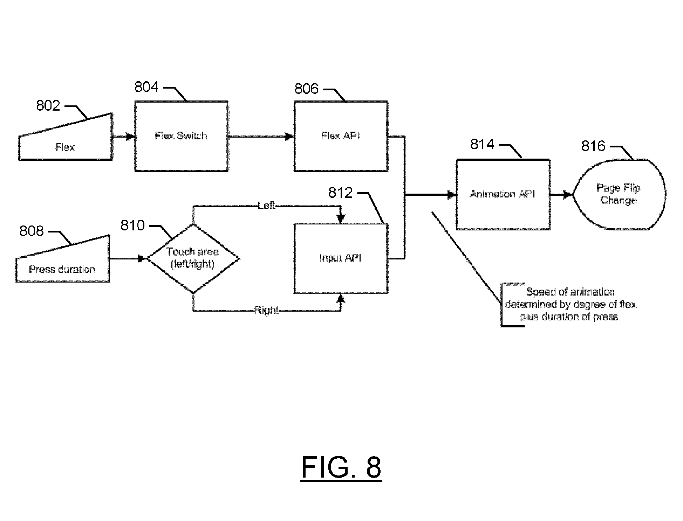

Referring now to FIG. 8, FIG. 8 illustrates an example process diagram according to an example method for content navigation according to an example embodiment wherein touch and hold gestures may be used to initiate and/or control navigation. In the embodiment described with respect to FIG. 8, left and right control areas are implemented. However, it will be appreciated that this implementation is provided by way of example and other arrangements of control areas (e.g., top and bottom) may be substituted within the scope of the disclosure. A user may flex 802 the flexible display 118. The flex switch 804 (e.g., a flex sensor 120) may detect flexing of the flexible display 118. A flex application programming interface (API), which may, for example, be implemented by and/or controlled by the navigation control circuitry 122 may receive an indication of the detected flexing and/or a detected degree of the flexing from the flex sensor 120. The flex API 806 may determine the flexing and/or degree of flexing based at least in part on the received indication and forward this information to an animation API 814. The animation API 814 may, for example, be implemented by and/or controlled by the navigation control circuitry 122.

Concurrent with flexing of the flexible display 118, a user may apply a touch and hold gesture input 808 to one or more of the left or right control areas. As illustrated by decisional block 810, the navigation control circuitry 122 may be configured to determine the touch and hold gesture(s) and determine whether a touch and hold gesture has been applied to or terminated at the left control area or the right control area. An indication of the touch and hold gesture action and whether it was applied to or terminated at the left control area or the right control area may be forwarded to an input API 812. The input API may, for example, be implemented by and/or controlled by the navigation control circuitry 122. The input API may be configured to determine information about the touch and hold gesture (e.g., a press duration of the touch and hold gesture, a degree of pressure applied by the touch and hold gesture, and/or the like) and forward this information to the animation API.

The animation API may be configured to determine a rate of navigation based at least in part on a combination of the degree of flexing and a property of the touch and hold gesture (e.g., the duration of the press, degree of pressure, and/or the like). The animation API may accordingly cause animation of the navigation 816 on the flexible display 118, such as by scrolling user interface panels, flipping user interface panels, or the like in accordance with the determined rate.

In some example embodiments, swipe gesture inputs may be used to initiate and control navigation. In such example embodiments, a user may, for example, hold the apparatus 102 with the flexible display 118 in a flat, or de-flexed, state. Prior to initiating a navigation action in accordance with such example embodiments, the user may place his thumbs or other digits onto two control areas and hold the digits to the control areas. Accordingly, a touch and hold gesture may be applied to each of the two control areas. The two control areas may, for example, be positioned at opposite edges of the flexible display 118 (e.g., left and right edges along a horizontal axis of the flexible display 118, top and bottom edges along a vertical axis of the flexible display 118, or the like). As an example with reference to FIG. 4, the control areas 402 and 404 of this example embodiment are positioned at opposite edges along a horizontal axis of the flexible display 118.

In accordance with some example embodiments, if no flex is applied to the flexible display 118, the navigation control circuitry 122 may not initiate navigation, regardless of the presence of a touch and hold gesture input to the control areas. Accordingly, the user may flex the flexible display 118 while maintaining the touch and hold gestures. In accordance with some example embodiments, so long as a touch and hold gesture input is maintained at both control areas, the navigation control circuitry 122 may not initiate the navigation action.

In order to initiate navigation, a user may replace a touch and hold gesture input at one of the control areas by a swipe gesture. The direction of the navigation may correspond to which of the touch and hold gestures is terminated. For example, in some example embodiments wherein the control areas are positioned at the left and right edges of the flexible display 118, if the touch and hold gesture input to the left control area is terminated and a swipe gesture is input to the left control area, the navigation direction may be from left-to-right. In this regard, user interface panels may be scrolled, flipped, or the like from the left side of the flexible display 118 to the right side of the flexible display 118. However, if the touch and hold gesture input to the right control area is terminated and a swipe gesture is input to the right control area, the navigation direction 118 may be from right-to-left and the user interface panels may be scrolled, flipped, or the like, from the right side of the flexible display 118 to the left side of the flexible display 118.

The navigation control circuitry 122 may determine a rate of the navigation based at least in part on a property of the swipe gesture. For example, the navigation control circuitry 122 may determine a rate of navigation based at least in part on a length of the swipe gesture, a rate of the swipe gesture, and/or the like. A length of the swipe gesture may further define the amount of content (e.g., the number of user interface panels) that is navigated. As an example, an axis having a length defined by a width, height, or the like of a control area may correspond to a number of user interface panels. Accordingly, if a length of the swipe gesture is the complete length of the axis, the navigation control circuitry 122 may navigate to the last user interface panel before stopping the navigation animation. On the other hand, if a length of the swipe gesture is half of the length of the axis, the navigation control circuitry 122 may navigate through half of the user interface panels. As another example, a predefined unit of distance may correspond to a predefined number of user interface panels. Thus, for example, if a length of 1 inch is defined to correspond to 10 user interface panels, a swipe gesture having a length of 1 inch may cause navigation through 10 user interface panels, a swipe gesture having a length of 2 inches may cause navigation through 20 user interface panels, and so on.

The navigation control circuitry 122 may be configured to cause feedback indicative of how many user interface panels will be navigated in response to a swipe gesture or other touch gesture input. This feedback may include tactile feedback, haptic feedback, visual feedback, audio feedback, and/or the like. The feedback may, for example, be provided in response to completion of a swipe or other touch gesture input. As another example, the feedback may be provided during the swipe or other touch gesture input.

A user may terminate the navigation by one or more of de-flexing the flexible display 118 or terminating the swipe gesture. Accordingly, the navigation control circuitry 118 may determine de-flexing of the flexible display 118 and/or termination of a swipe gesture and cease navigation in response thereto. In some example embodiments, the navigation control circuitry 118 may cease a navigation animation such that a user interface panel or other content that is displayed when the navigation is terminated remains displayed. In other example embodiments, the navigation animation may continue and gradually slow to termination. In this regard, navigation may continue as an "inertia" effect wherein animation and navigation may continue until terminating. The length and rate of such an inertia effect may, for example, vary based at least in part on a rate of navigation prior to termination of the navigation.

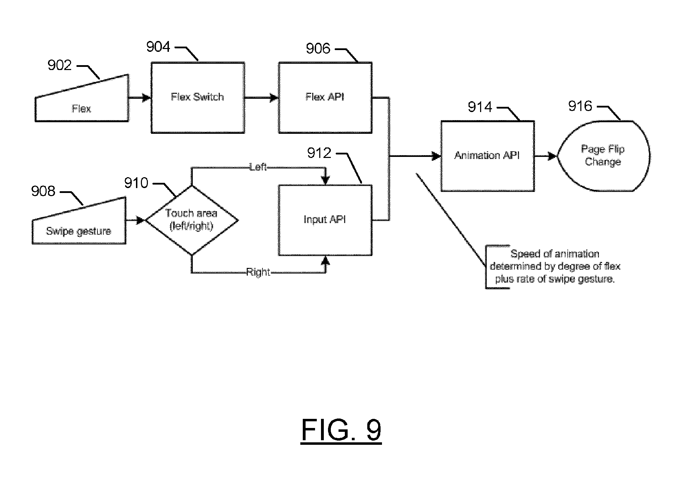

Referring now to FIG. 9, Fig. 9 illustrates an example process diagram according to an example method for content navigation according to an example embodiment wherein a swipe gesture may be used to initiate and/or control navigation. In the embodiment described with respect to FIG. 9, left and right control areas are implemented. However, it will be appreciated that this is by way of example and other arrangements of control areas (e.g., top and bottom) may be substituted. A user may flex 902 the flexible display 118. The flex switch 904 (e.g., a flex sensor 120) may detect flexing of the flexible display 118. A flex API, which may, for example, be implemented by and/or controlled by the navigation control circuitry 122 may receive an indication of the detected flexing and/or a detected degree of the flexing from the flex sensor 120. The flex API 906 may determine the flexing and/or degree of flexing based at least in part on the received indication and forward this information to an animation API 914. The animation API 814 may, for example, be implemented by and/or controlled by the navigation control circuitry 122.

Concurrent with flexing of the flexible display 118, a user may apply swipe gesture input 908 to one of the left or right control areas. As illustrated by decisional block 910, the navigation control circuitry 122 may be configured to determine the swipe gesture and determine whether the swipe gesture has been applied to or terminated at the left control area or the right control area. An indication of the touch and hold gesture action and whether it was applied to or terminated at the left control area or the right control area may be forwarded to an input API 912. The input API may, for example, be implemented by and/or controlled by the navigation control circuitry 122. The input API may be configured to determine information about the swipe gesture (e.g., a length of the swipe gesture, a rate of the swipe gesture, and/or the like) and forward this information to the animation API.

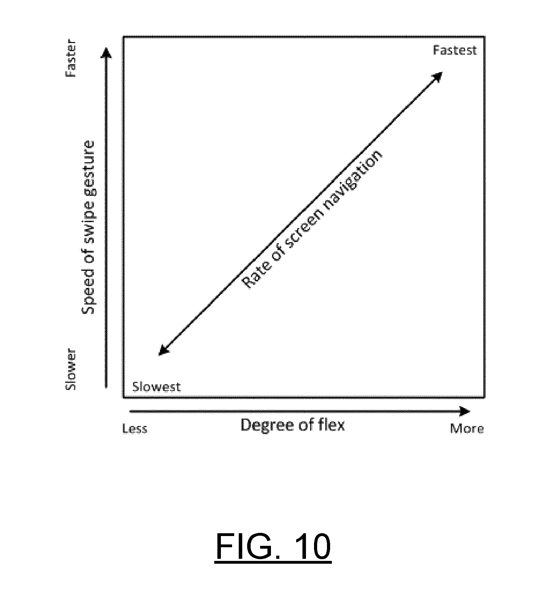

The animation API may be configured to determine a rate of navigation based at least in part on a combination of the degree of flexing and a property of the touch and hold gesture (e.g., the length of the swipe, rate of the swipe, and/or the like). For example, FIG. 10 illustrates that in some example embodiments, the rate of navigation may be proportional to a degree of flex and a rate (e.g., speed) of the swipe gesture. Accordingly, the greater the rate of the swipe gesture and the greater the degree of flex, the greater the rate of navigation may be. The animation API may accordingly cause animation of the navigation 916 on the flexible display 118, such as by scrolling user interface panels, flipping user interface panels, or the like in accordance with the determined rate.

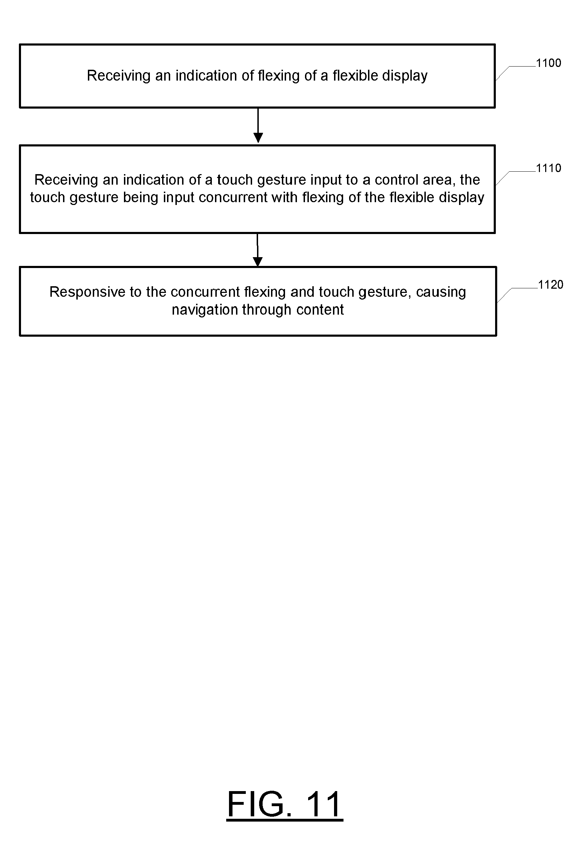

FIG. 11 illustrates a flowchart according to an example method for content navigation according to an example embodiment. The operations illustrated in and described with respect to FIG. 11 may, for example, be performed by, with the assistance of, and/or under the control of one or more of the processor 110, memory 112, communication interface 114, user interface 116, flexible display 118, flex sensor 120, or navigation control circuitry 122. Operation 1100 may comprise receiving an indication of flexing of the flexible display 118. The processor 110, memory 112, user interface 116, flexible display 118, flex sensor 120, and/or navigation control circuitry 122 may, for example, provide means for performing operation 1100. Operation 1110 may comprise receiving an indication of a touch gesture input to a control area. The touch gesture may be input concurrent with flexing of the flexible display 118 (e.g., while the flexible display 118 is flexed). The processor 110, memory 112, user interface 116, flexible display 118, and/or navigation control circuitry 122 may, for example, provide means for performing operation 1110. Operation 1120 may comprise, in response to the concurrent flexing and touch gesture, causing navigation through content. In this regard, for example, operation 1120 may comprise causing navigation through a plurality of user interface panels. The processor 110, memory 112, user interface 116, flexible display 118, and/or navigation control circuitry 122 may, for example, provide means for performing operation 1120.

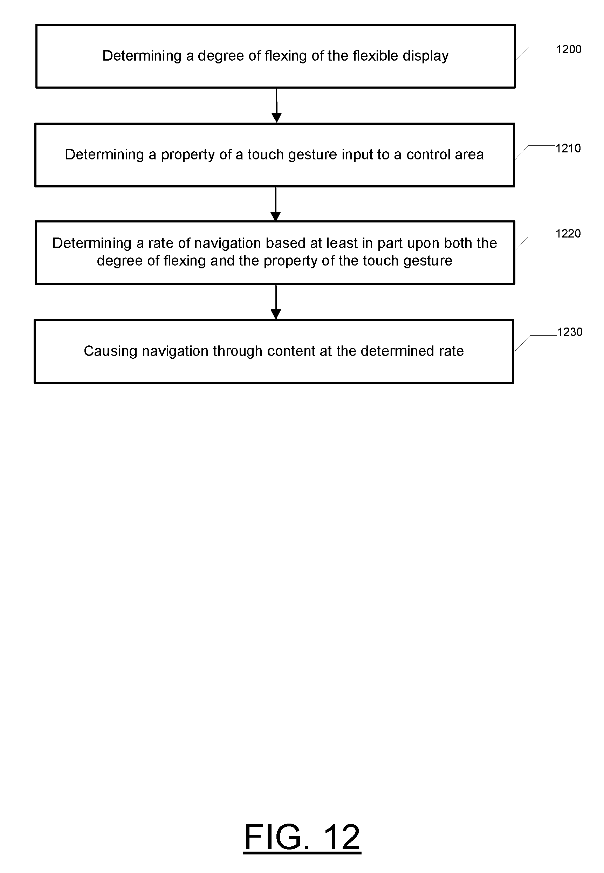

FIG. 12 illustrates a flowchart according to an example method for content navigation according to an example embodiment. The operations illustrated in and described with respect to FIG. 12 may, for example, be performed by, with the assistance of, and/or under the control of one or more of the processor 110, memory 112, communication interface 114, user interface 116, flexible display 118, flex sensor 120, or navigation control circuitry 122. Operation 1200 may comprise determining a degree of flexing of the flexible display 118. The degree of flexing may, for example, be determined based at least in part on information carried in a signal or other indication of flexing of the flexible display. The processor 110, memory 112, user interface 116, flexible display 118, flex sensor 120, and/or navigation control circuitry 122 may, for example, provide means for performing operation 1200. Operation 1210 may comprise determining a property of a touch gesture input to a control area. The property of the touch gesture may, for example, be determined based at least in part on information carried in a signal or other indication of the touch gesture input. The processor 110, memory 112, user interface 116, flexible display 118, and/or navigation control circuitry 122 may, for example, provide means for performing operation 1210. Operation 1220 may comprise determining a rate of navigation based at least in part upon both the degree of flexing and the property of the touch gesture. The processor 110, memory 112, and/or navigation control circuitry 122 may, for example, provide means for performing operation 1220. Operation 1230 may comprise causing navigation through content at the determined rate. In this regard, for example, operation 1230 may comprise causing navigation through a plurality of user interface panels at the determined rate. The processor 110, memory 112, user interface 116, flexible display 118, and/or navigation control circuitry 122 may, for example, provide means for performing operation 1230.

FIGs. 11-12 each illustrate a flowchart of a system, method, and computer program product according to an example embodiment. It will be understood that each block of the flowcharts, and combinations of blocks in the flowcharts, may be implemented by various means, such as hardware and/or a computer program product comprising one or more computer-readable mediums having computer readable program instructions stored thereon. For example, one or more of the procedures described herein may be embodied by computer program instructions of a computer program product. In this regard, the computer program product(s) which embody the procedures described herein may be stored by one or more memory devices of a mobile terminal, server, or other computing device (for example, in the memory 112) and executed by a processor in the computing device (for example, by the processor 110). In some embodiments, the computer program instructions comprising the computer program product(s) which embody the procedures described above may be stored by memory devices of a plurality of computing devices. As will be appreciated, any such computer program product may be loaded onto a computer or other programmable apparatus (for example, an apparatus 102) to produce a machine, such that the computer program product including the instructions which execute on the computer or other programmable apparatus creates means for implementing the functions specified in the flowchart block(s). Further, the computer program product may comprise one or more computer-readable memories on which the computer program instructions may be stored such that the one or more computer-readable memories can direct a computer or other programmable apparatus to function in a particular manner, such that the computer program product comprises an article of manufacture which implements the function specified in the flowchart block(s). The computer program instructions of one or more computer program products may also be loaded onto a computer or other programmable apparatus (for example, an apparatus 102) to cause a series of operations to be performed on the computer or other programmable apparatus to produce a computer-implemented process such that the instructions which execute on the computer or other programmable apparatus implement the functions specified in the flowchart block(s).

Accordingly, blocks of the flowcharts support combinations of means for performing the specified functions. It will also be understood that one or more blocks of the flowcharts, and combinations of blocks in the flowcharts, may be implemented by special purpose hardware-based computer systems which perform the specified functions, or combinations of special purpose hardware and computer program product(s).

The above described functions may be carried out in many ways. For example, any suitable means for carrying out each of the functions described above may be employed to carry out embodiments of the invention. In one embodiment, a suitably configured processor (for example, the processor 110) may provide all or a portion of the elements. In another embodiment, all or a portion of the elements may be configured by and operate under control of a computer program product. The computer program product for performing the methods of an example embodiment of the invention includes a computer-readable storage medium (for example, the memory 112), such as the non-volatile storage medium, and computer-readable program code portions, such as a series of computer instructions, embodied in the computer-readable storage medium.

Many modifications and other embodiments of the inventions set forth herein will come to mind to one skilled in the art to which these inventions pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the invention. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the invention. In this regard, for example, different combinations of elements and/or functions than those explicitly described above are also contemplated within the scope of the invention. Although specific terms are employed herein, they are used in a generic and descriptive sense only and not for purposes of limitation.

## Claims

1. A method comprising:
receiving an indication of flexing of a flexible display;
receiving an indication of a touch gesture input to a control area, the touch gesture being input concurrent with flexing of the flexible display; and
responsive to flexing of the flexible display and the concurrent touch gesture, causing, by a processor, navigation through content.

2. The method of claim 1, further comprising:
determining, based at least in part on the received indication of flexing of the flexible display, a degree of flexing of the flexible display;
determining, based at least in part on the received indication of the touch gesture, a property of the touch gesture; and
determining a rate of navigation based at least in part upon both the degree of flexing and the property of the touch gesture; and
wherein causing navigation comprises causing navigation through the content at the determined rate.

3. The method of claim 2, wherein the degree of flexing defines a base rate of navigation and the property of the touch gesture defines a finer level of control of the rate of navigation than the degree of flexing, thereby regulating the base rate of navigation defined by the degree of flexing.

4. The method of claim 1, wherein:
receiving an indication of the touch gesture input comprises receiving an indication of a termination of one of a first touch and hold gesture input to a first control area or a second touch and hold gesture input to a second control area, the first and second touch and hold gestures being held concurrently prior to the termination; and
causing navigation comprises causing navigation responsive to the termination.

5. The method of claim 4, wherein causing navigation comprises causing navigation through the content at a rate at least partially defined by a degree of pressure of the one of the first touch and hold gesture input or the second touch and hold gesture input that is not terminated.

6. The method of claim 4, further comprising:
receiving an indication of one or more of a reapplication of the terminated touch and hold gesture or de-flexing of the flexible display; and
ceasing navigation responsive to the one or more of reapplication of the terminated touch and hold gesture or de-flexing of the flexible display.

7. The method of claim 1, wherein:
receiving an indication of the touch gesture input to the control area comprises receiving an indication of a swipe gesture within the control area; and
causing navigation comprises causing navigation responsive to the swipe gesture.

8. The method of claim 7, wherein causing navigation comprises causing navigation through the content at a rate at least partially defined by one or more of a rate of the swipe gesture or a length of the swipe gesture.

9. The method of claim 7, further comprising:
receiving an indication of one or more of a termination of the swipe gesture or de-flexing of the flexible display; and
ceasing navigation responsive to the one or more of termination of the swipe gesture or de-flexing of the flexible display.

10. The method of claim 1, wherein the content comprises a plurality of user interface panels.

11. An apparatus comprising means for causing the method according to any of claims 1 to 10 to be performed.

12. The apparatus of claim 11, wherein the apparatus comprises a flex sensor configured to detect flexing of the flexible display, wherein the indication of flexing of the flexible display comprises a signal generated by the flex sensor in response to detecting flexing of the flexible display.

13. The apparatus according to claim 11, wherein the apparatus comprises or is embodied on a mobile computing device, the mobile computing device comprising user interface circuitry and user interface software stored on one or more of the at least one memory, wherein the user interface circuitry and user interface software are configured to:
facilitate user control of at least some functions of the mobile computing device through use of a display; and
cause at least a portion of a user interface of the mobile computing device to be displayed on the display to facilitate user control of at least some functions of the mobile computing device.

14. A computer-readable medium encoded with instructions that, when executed by a computer, cause the method according to any of claims 1 to 10 to be performed.
